# EUROPEAN PATENT APPLICATION

(11) **EP 4 667 775 A1**
(43) Date of publication of application: **24.12.2025**
(21) Application number: 25764396.5
(22) Date of filing: 04.03.2025
(51) Int. Cl.: F16F 15/02

(54) **MAGNETIC DAMPING ROTARY STRUCTURE AND MAGNETIC DAMPING GENERATION METHOD**

(30) Priority: 07.02.2025 CN 202510135402
(71) Applicant: Shenzhen Loyal Electronics Co., Ltd., Shenzhen, Guangdong 518000 (CN)
(72) Inventor: CHEN, Shaojuan, Shenzhen, Guangdong 518000 (CN); JU, Qiaolong, Shenzhen, Guangdong 518000 (CN); LIU, Junliang, Shenzhen, Guangdong 518000 (CN)
(74) Representative: Isern Patentes y Marcas S.L.
(86) International application number: PCT/CN2025/080432
(87) International publication number: WO 2025/213992

(57) **Abstract**

The present disclosure relates to the technical field of of electronic components. A magnetic damping rotational structure and a magnetic damping generation method are provided. The structure includes: a mounting base; a first annular magnetic bearing, fixed at the mounting base, where at least one side surface of the first annular magnetic bearing is uniformly arranged with a plurality of first grooves, and a first magnetic protrusion is formed between adjacent two first grooves; and at least one second annular magnetic bearing, rotatably arranged at the mounting base, where the second annular magnetic bearing and the first annular magnetic bearing are coaxially arranged together, a plurality of second grooves are uniformly arranged at a surface of one side of the second annular magnetic bearing facing the first magnetic protrusion, and a second magnetic protrusion is formed between adjacent two second grooves. A gap is formed between the first magnetic protrusion and the second magnetic protrusion, and the first magnetic protrusion and the second magnetic protrusion are arranged in one-to-one correspondence and generate attraction magnetic forces. When the second annular magnetic bearing rotates slowly, the damping value changes due to the attraction between the first annular magnetic bearing and the second annular magnetic bearing, resulting in a notched feedback of hand-feel weight. This effectively improves the damping effect and can be applied in fields such as mice, keyboards, automotive dashboards, etc.

## Description

### FIELD

The present disclosure relates to the technical field of electronic components, in particular to a magnetic damping rotational structure and a magnetic damping generation method.

### BACKGROUND

A magnetic damping rotational structure is a rotational structure that generates a magnetic damping effect through a magnetic material. The application range of the magnetic damping rotational structure is very wide, such as a scroll wheel of a keyboard or a mouse, a knob of a car infotainment system, a control knob of a household appliance, etc. The magnetic damping of the magnetic damping rotational structure is mainly configured to control the rotational speed of the rotational structure or provide the damping effect. This improves the hand-feel experience of users during use and makes the rotation of the rotational structure smoother and more controllable.

Taking the mouse scroll wheel as an example, notched feedback and damping feedback are required when the mouse scroll wheel is scrolled, so that users can better control computer pages. However, scroll wheel in the current magnetic damping mouse is usually a damping generation wheel formed by splicing multiple small magnets around a central axis to provide damping sensation to the mouse scroll wheel. The damping generation wheel formed by splicing the small magnets has a complex structure, and the assembly of the small magnets during production is prone to misalignment, resulting in rework and ultimately leading to a higher production cost for magnetic damping mouse scroll wheels.

Therefore, the above-mentioned technical defects urgently need to be improved.

### SUMMARY

In view of the above-mentioned defects of the prior art, the present disclosure provides a magnetic damping rotational structure and a magnetic damping generation method to simplify current magnetic damping rotational structures and reduce the production cost of current magnetic damping rotational structures.

Technical solutions adopted in the present disclosure to solve the technical problems are as follows: a magnetic damping rotational structure and a magnetic damping generation method are closed, the magnetic damping rotational structure includes:
a mounting base;
a first annular magnetic bearing, fixed at the mounting base, where at least one side surface of the first annular magnetic bearing is uniformly arranged with a plurality of first grooves, and a first magnetic protrusion is formed between adjacent two first grooves; and,
at least one second annular magnetic bearing, rotatably arranged at the mounting base, where the second annular magnetic bearing and the first annular magnetic bearing are coaxially arranged together, a plurality of second grooves are uniformly arranged at a surface of one side of the second annular magnetic bearing facing the first magnetic protrusion, and a second magnetic protrusion is formed between adjacent two second grooves;
where a gap is formed between the first magnetic protrusion and the second magnetic protrusion, and the first magnetic protrusion and the second magnetic protrusion are arranged in one-to-one correspondence and generate attraction magnetic forces.

In some embodiments, a quantity of first grooves is the same as a quantity of second grooves, a size of the first magnetic protrusion is the same as a size of the second magnetic protrusion, and a shape of the first magnetic protrusion is the same as a shape of the second magnetic protrusion.

In some embodiments, the first groove and the second groove are both V-shaped grooves.

In some embodiments, an outer ring wheel is coaxially arranged at the second annular magnetic bearing, and the outer ring wheel is detachably connected to the second annular magnetic bearing.

In some embodiments, a plurality of positioning pins are arranged at the second annular magnetic bearing, and the second annular magnetic bearing is fixedly connected to the outer ring wheel through the positioning pins.

In some embodiments, the outer ring wheel includes:
a grating clamp ring, where the grating clamp ring and the second annular magnetic bearing are coaxially arranged together, a plurality of light pass holes are arranged in a circumferential direction of the grating clamp ring, and an extension direction of the through holes is parallel to an axis direction of the grating clamp ring; and,
an outer rim, sleeved on an outer side wall of the grating clamp ring.

In some embodiments, a clearance groove is arranged at the axis of the grating clamp ring and is configured to accommodate the first annular magnetic bearing and the second annular magnetic bearing.

In some embodiments, the outer rim is a metal rim.

A second aspect of the present disclosure provides a magnetic damping generation method of the magnetic damping rotational structure described above, including the following steps:
driving, by the outer ring wheel, the second annular magnetic bearing to rotate when the outer ring wheel is scrolled by a user;
rotating the second annular magnetic bearing to cause a displacement between the first magnetic protrusion and the second magnetic protrusion, where the first magnetic protrusion and the second magnetic protrusion are in one-to-one correspond, have opposite magnetic poles, and attract each other; and,
changing an attraction magnetic force between the first magnetic protrusion and the second magnetic protrusion to generate damping between the first magnetic protrusion and the second magnetic protrusion.

Compared with the prior art, the present disclosure provides a magnetic damping rotational structure and a magnetic damping generation method. In the present technical solutions, a plurality of first magnetic protrusions are spaced around a central axis from an side surface of the first annular magnetic bearing using a first groove, so that the magnetic strength of the side surface of the first annular magnetic bearing is uniformly distributed at the plurality of first magnetic protrusions. Similarly, the magnetic strength of the side surface of the second annular magnetic bearing is uniformly distributed at the plurality of second magnetic protrusions. When the second annular magnetic bearing rotates slowly, the damping value changes due to the attraction between the first annular magnetic bearing and the second annular magnetic bearing, resulting in a notched feedback of hand-feel weight. This effectively improves the damping effect and can be applied in fields such as mouse, keyboards, automotive dashboards, etc.

### BRIEF DESCRIPTION OF THE DRAWINGS

In order to provide a clearer description of the technical solutions in the embodiments of the present disclosure or in the prior art, a brief introduction is given to the accompanying drawings required for the description of the embodiments or the prior art. It is obvious that the accompanying drawings described below are some embodiments of the present disclosure. For those skilled in the art, other drawings can be obtained based on these drawings without creative labor.
FIG. 1 is a schematic diagram of an overall structure of a magnetic damping rotational structure provided in the present embodiments.
FIG. 2 is a schematic diagram of an overall structure of the magnetic damping rotational structure provided in the present embodiments from another perspective.
FIG. 3 is a schematic diagram of an exploded structure of the magnetic damping rotational structure provided in the present embodiments.
FIG. 4 is a schematic diagram of an exploded structure of the magnetic damping rotational structure provided in the present embodiments from another perspective.
FIG. 5 is a schematic diagram of exploded structures of a first annular magnetic bearing and a second annular magnetic bearing of the magnetic damping rotational structure provided in the present embodiments.
FIG. 6 is a schematic diagram of exploded structures of the first annular magnetic bearing and the second annular magnetic bearing of the magnetic damping rotational structure provided in the present embodiments from another perspective.
FIG. 7 is a schematic diagram of a structure of the second annular magnetic bearing of the magnetic damping rotational structure provided in the present embodiments.
FIG. 8 is a schematic diagram of an overall structure of a magnetic damping rotational structure provided in another one of the present embodiments.
FIG. 9 is a schematic diagram of an exploded structure of the magnetic damping rotational structure provided in another one of the present embodiments.
FIG. 10 is a schematic diagram of another exploded structure of the magnetic damping rotational structure provided in another one of the present embodiments.

In the figures: 1-mounting base; 11-connecting shaft; 2-first annular magnetic bearing; 21-first groove; 22-first magnetic protrusion; 3-outer ring wheel; 31-grating clamp ring; 311-clearance groove; 312-light pass hole; 32-outer rim; 4-second annular magnetic bearing; 41-second groove; 42-second magnetic protrusion; 43-positioning pin.

### DETAILED DESCRIPTION OF THE EMBODIMENTS

The embodiments of the present disclosure are described in detail below and are shown in the accompanying drawings. Identical or similar reference numerals from beginning to end represent identical or similar components or components with identical or similar functions. The embodiments described below with reference to the accompanying drawings are exemplary and are only used to illustrate the present disclosure, and should not be understood as limiting the present disclosure.

In the description of the present disclosure, it should be understood that the terms "center", "transverse", "longitudinal", "up", "down", "front", "rear", "left", "right", "vertical", "horizontal", "top", "bottom", "inside", "outside" and other directional or positional relationships indicated are based on the directional or positional relationships shown in the accompanying drawings, only for the convenience of simplifying the description of the present disclosure, and do not indicate or imply that the apparatus or component referred to must have a specific orientation and be constructed and operated in a specific orientation, and therefore cannot be understood as a limitation of the present disclosure. In addition, the terms "first" and "second" are only used for descriptive purposes and cannot be understood as indicating or implying relative importance or the number of technical features. Thus, the features limited to "first" and "second" may explicitly or implicitly include one or more of these features. In the description of the present disclosure, unless otherwise specified, "multiple" and "plurality" refer to two or more.

In the description of the present disclosure, it should be noted that unless otherwise specified and limited, the terms "arrange", "set", "provide", "install", and "connect" should be broadly understood. For example, it can be a fixed connection, a detachable connection, or an integral connection. It can be a directly connection or an indirectly connection through an intermediate component. For those ordinary skilled in the art, the specific meanings of the above terms in the present disclosure can be understood in specific situations.

In addition, the technical features involved in different embodiments of the present disclosure described above can be combined with each other as long as they do not conflict with each other.

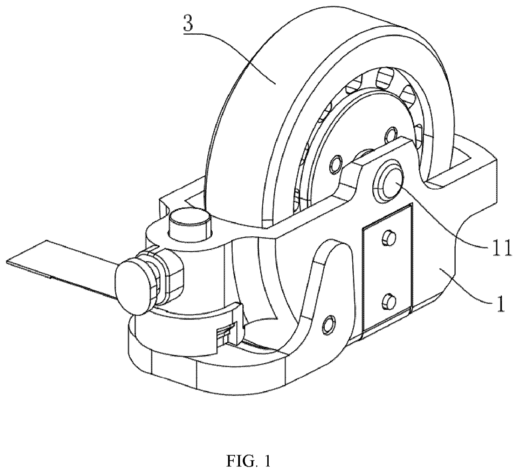

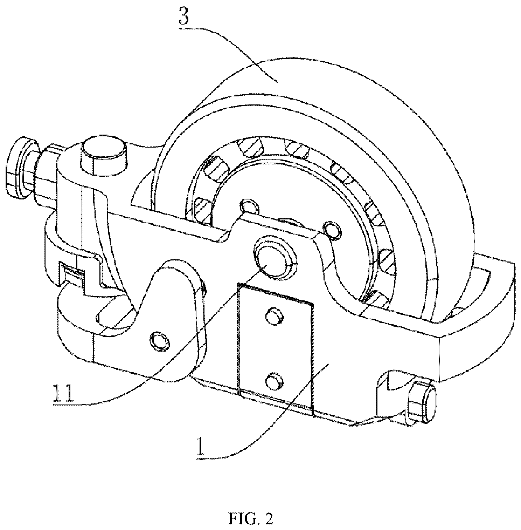

The present disclosure provides a magnetic damping rotational structure as shown in FIGs. 1, 2, and 3, which is a rotational structure that generates a magnetic damping effect through a magnetic material. The application range of the magnetic damping rotational structure is very wide, such as a scroll wheel of a keyboard or a mouse, a knob of a car infotainment system, a control knob of a household appliance, etc. The magnetic damping of the magnetic damping rotational structure is mainly configured to control the rotational speed of the rotational structure or provide the damping effect. This improves the hand-feel experience of users during use and makes the rotation of the rotational structure smoother and more controllable. A main structure of the present disclosure includes: a mounting base 1, a first annular magnetic bearing 2, and at least one second annular magnetic bearing 4. The first annular magnetic bearing 2 is fixed on the mounting base 1, and at least one side surface of the first annular magnetic bearing 2 is uniformly arranged with a plurality of first grooves 21. A first magnetic protrusion 22 is formed between adjacent two first grooves 21. The second annular magnetic bearing 4 is rotatably arranged on the mounting base 1. The second annular magnetic bearing 4 and the first annular magnetic bearing 2 are coaxially arranged together. The surface of one side of the second annular magnetic bearing 4 facing the first magnetic protrusion 22 is uniformly arranged with a plurality of second grooves 41, and a second magnetic protrusion 42 is formed between adjacent two second grooves 41.

There is a gap formed between the first magnetic protrusion 22 and the second magnetic protrusion 42, and the first magnetic protrusion 22 and the second magnetic protrusion 42 are arranged in one-to-one correspondence and generate attraction magnetic forces. In some embodiments, a connecting shaft is located between and passes the first magnetic protrusion 22 and the second magnetic protrusion 42.

The mounting base 1 is configured to mount and fix various structural components. Different functional components can be set at the mounting base 1 according to functional requirements, such as a rotatable switch, a photoelectric switch, etc. The mounting base 1 is arranged with a connecting shaft 11, which in some embodiments is configured as a metal shaft to ensure the structural strength and durability of the rotational structure. The first annular magnetic bearing 2 is sleeved on the connecting shaft 11 and fixed on the mounting base 1. At least one side surface of two side surfaces of the first annular magnetic bearing 2 is uniformly arranged with a plurality of first grooves 21, and the plurality of first grooves 21 extend in a direction deviating from an axis of the first annular magnetic bearing 2. A first magnetic protrusion 22 is formed between adjacent two first grooves 21. The arrangement of the first grooves 21 can weaken the magnetic properties at the location of each first groove 21; therefore, the attraction magnetic force of the side surface of the first annular magnetic bearing 2 can be uniformly distributed at the plurality of first magnetic protrusions 22. An outer ring wheel 3 is sleeved on the connecting shaft 11. The second annular magnetic bearing 4 is arranged at an axis of the outer ring wheel 3 and located at a side surface of the first annular magnetic bearing 2. The surface of one side of the second annular magnetic bearing 4 near the first magnetic protrusion 22 is uniformly arranged with a plurality of second grooves 41. The plurality of second grooves 41 extend in a direction deviating from an axis of the second annular magnetic bearing 4, and a second magnetic protrusion 42 is formed between adjacent two second grooves 41. Similarly, the arrangement of the second groove 41 can weaken the magnetic properties at the location of each second groove 41; therefore, the attraction magnetic force of the side surface of the second annular magnetic bearing 4 can be uniformly distributed at the plurality of second magnetic protrusions 42. The first magnetic protrusion 22 and the second magnetic protrusion 42 are set in one-to-one correspondence through attraction magnetic forces, and a gap is formed between the first magnetic protrusion 22 and the second magnetic protrusion 42. In some embodiments, the connecting shaft 11 is coaxially arranged with a shaft step located between the first magnetic protrusion 22 and the second magnetic protrusion 42. The gap and the coaxial connection between the first magnetic protrusion 22 and the second magnetic protrusion 42 are maintained by the shaft step. In some embodiments, the shaft step is integrally formed with the connecting shaft 11, and both the shaft step and the connecting shaft 11 are nonmagnetic material structures to avoid disturbing the magnetic fields of the first magnetic protrusion 22 and the second magnetic protrusion 42.

It can be seen that the first annular magnetic bearing 2, the second annular magnetic bearing 4, and the outer ring wheel 3 are directly or indirectly sleeved on the connecting shaft 11. When the outer ring wheel 3 is scrolled, the second annular magnetic bearing 4 rotates synchronously. At this point, the axial attraction magnetic forces between adjacent two magnetic surfaces of the second annular magnetic bearing 4 and the first annular magnetic bearing 2 change, so that the damping value of the outer ring wheel 3 changes during rotation, resulting in the notched feedback of hand-feel weight.

It should be noted that, taking the mouse scroll wheel as an example, notched feedback and damping feedback are required when the mouse scroll wheel is scrolled, so that users can better control computer pages. However, the current magnetic damping mouse scroll wheel is usually a damping generation wheel formed by splicing multiple small magnets around a central axis to provide damping sensation to the mouse scroll wheel. The damping generation wheel formed by splicing the small magnets has a complex structure, and the assembly of the small magnets during production is prone to misalignment, resulting in rework and ultimately leading to a higher production cost for magnetic damping mouse scroll wheels.

This technical solution divides the side surface of the first annular magnetic bearing 2 into a plurality of first magnetic protrusions 22 around the central axis using the first grooves 21, so that the magnetic strength of the side surface of the first annular magnetic bearing 2 is uniformly distributed at the plurality of first magnetic protrusions 22. Similarly, the magnetic strength of the side surface of the second annular magnetic bearing 4 is uniformly distributed at he plurality of second magnetic protrusions 42. When the second annular magnetic bearing 4 rotates slowly, the damping value changes due to the attraction between the first annular magnetic bearing 2 and the second annular magnetic bearing 4, resulting in the notched feedback of hand-feel weight, effectively improving the damping effect. When the outer ring wheel 3 rotation accelerates, utilizing torque inertia can make the second annular magnetic bearing 4 rapidly rotate until the rotational speeds of the outer ring wheel 3 and the second annular magnetic bearing 4 slow down to a point where damping cannot be overcome, and then slow down to a stop.

In a second embodiment, a first annular magnetic bearing 2 and two second annular magnetic bearings 4 are coaxially arranged on the connecting shaft 11, and both the first annular magnetic bearing 2 and the connecting shaft 11 are fixedly connected to the mounting base 1. A plurality of first grooves 21 are uniformly arranged on both side surfaces of the first annular magnetic bearing 2, and a first magnetic protrusion 22 is formed between adjacent two first grooves 21. Two second annular magnetic bearings 4 are respectively rotatable arranged on the mounting base 1. The surface of one side of the second annular magnetic bearing 4 facing the first magnetic protrusion 22 is uniformly arranged with a plurality of second grooves 41, and a second magnetic protrusion 42 is formed between adjacent two second grooves 41. There are gaps between the two second magnetic protrusions 42 and two ends of the first magnetic protrusion 22. The first magnetic protrusion 22 and the second magnetic protrusion 42 are arranged in one-to-one correspondence and generate attraction magnetic forces.

Two second annular magnetic bearings 4 are respectively arranged at two ends of the first annular magnetic bearing 2, and there is a magnetic damping effect between any one of the two second annular magnetic bearings 4 and the first annular magnetic bearing 2.

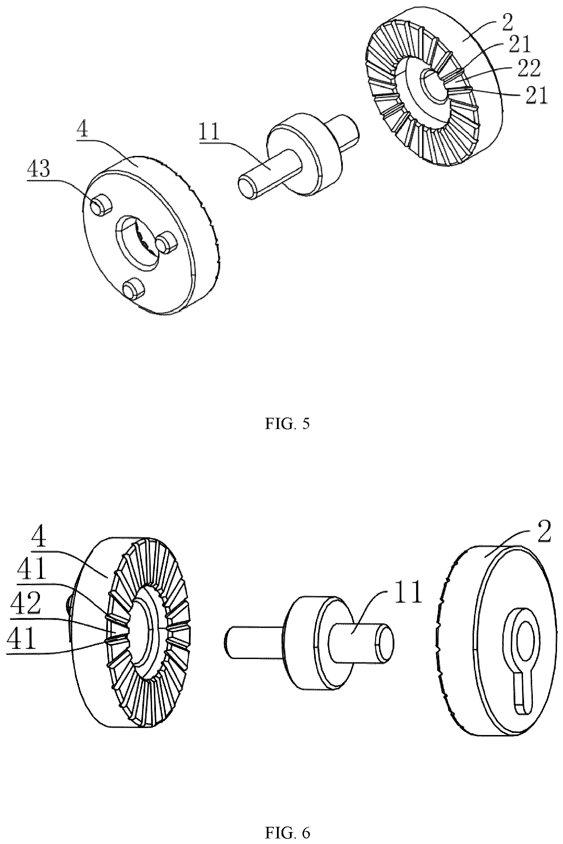

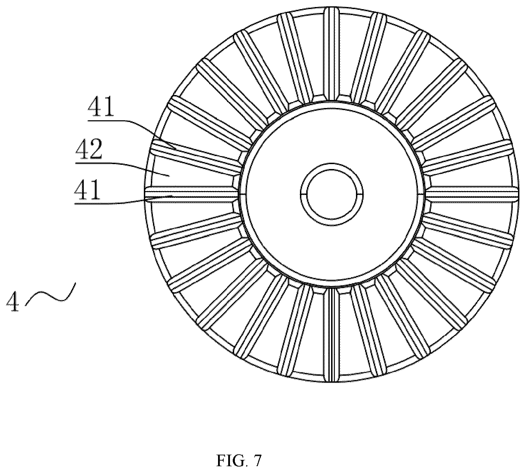

In practical applications, the dual-magnetic damping scroll wheel structure in this embodiment can ensure better magnetic damping effects during scroll wheel rotation. The structural design is simpler and more compact, and can be applied to the scroll wheel control requirements of a dual-scroll wheel mouse or car infotainment system to achieve scrolling functions of more scroll wheels. Furthermore, as shown in FIGs. 6 and 7, magnetic poles of the first magnetic protrusion 22 and the second magnetic protrusion 42 are opposite. It can be understood that the opposite magnetic poles of the first magnetic protrusion 22 and the second magnetic protrusion 42, can make the first magnetic protrusion 22 and the second magnetic protrusion 42 attract each other, so as to improve the magnetic damping effect generated between the first magnetic protrusion 22 and the second magnetic protrusion 42.

Furthermore, as shown in FIGs. 6 and 7, the number of the first grooves 21 is the same as the number of the second grooves 41, the size of the first magnetic protrusion 22 is the same as the size of the second magnetic protrusion 42, and the shape of the first magnetic protrusion 22 is the same as the shape of the second magnetic protrusion 42.

It can be understood that in order to make the notched feedback during the rotation of the magnetic damping rotational structure clearer, the number of the first grooves 21 and the number of the second grooves 41 need to be the same, the size of the first magnetic protrusion 22 and the size of the second magnetic protrusion 42 need to be the same, and the shape of the first magnetic protrusion 22 and the shape of the second magnetic protrusion 42 need to be the same.

Furthermore, as shown in FIGs. 5 and 6, both the first groove 21 and the second groove 41 are V-shaped grooves. The arrangement of the V-shaped grooves allows the magnetic protrusions (the first magnetic protrusion 22 and the second magnetic protrusion 42) to present a structure with a wider bottom and a narrower top. This structural design allows the attraction magnetic forces of the magnetic side surfaces of the annular magnetic bearings (the first annular magnetic bearing 2 and the second annular magnetic bearing 4) to concentrate along slopes of the V-shaped grooves at a top of the magnetic protrusions (the first magnetic protrusion 22 and the second magnetic protrusion 42) making the notched feedback between the first annular magnetic bearing 2 and the second annular magnetic bearing 4 clearer, and improving the magnetic damping effect between the first annular magnetic bearing 2 and the second annular magnetic bearing 4.

Furthermore, an outer ring wheel 3 is coaxially arranged on the second annular magnetic bearing 4, and the outer ring wheel 3 is detachably connected to the second annular magnetic bearing 4.

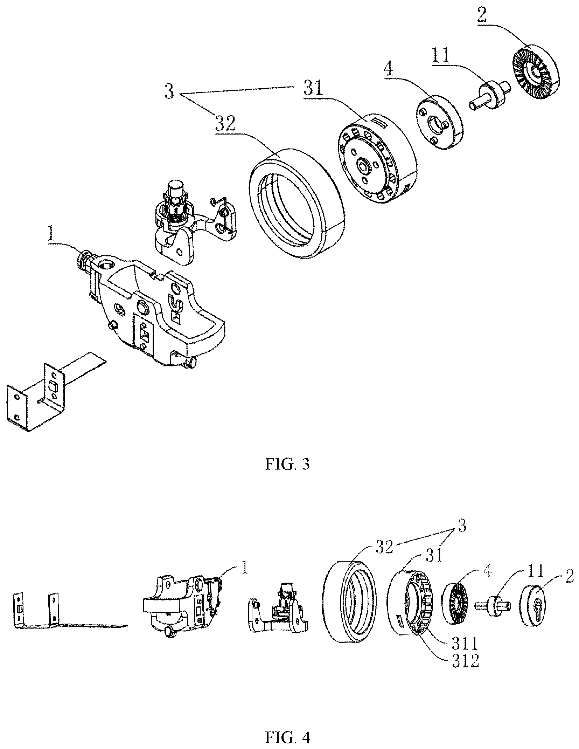

Furthermore, as shown in FIGs. 3, 4, and 5, the second annular magnetic bearing 4 is arranged with a plurality of positioning pins 43, and is fixedly connected to the outer ring wheel 3 through the plurality of positioning pins 43. The second annular magnetic bearing 4 is connected to the outer ring wheel 3 through the positioning pins 43, which can prevent slippage between the second annular magnetic bearing 4 and the outer ring wheel 3. In some embodiments, the second annular magnetic bearing 4 is detachably connected to the outer ring wheel 3.

Furthermore, as shown in FIGs. 3 and 4, the outer ring wheel 3 includes a grating clamp ring 31 and an outer rim 32. The grating clamp ring 31 and the second annular magnetic bearing 4 are coaxially arranged together, and a plurality of light pass holes 312 are arranged in a circumferential direction of the grating clamp ring 31. An extension direction of the through holes 312 is parallel to an axis direction of the grating clamp ring 31. The outer rim 32 is sleeved on an outer side wall of the grating clamp ring 31.

Furthermore, as shown in FIG. 4, a clearance groove 311 is arranged at the axis of the grating clamp ring 31 and is configured to accommodate the first annular magnetic bearing 2 and the second annular magnetic bearing 4. The first annular magnetic bearing 2 and the second annular magnetic bearing 4 are accommodated in the clearance groove 311 at the axis of the grating clamp ring 31, which can make the entire rotational wheel structure more compact and integrated. Moreover, the wheel structure including the first annular magnetic bearing 2, the second annular magnetic bearing 4, and the grating clamp ring 31 is more reasonable.

Furthermore, the outer rim 32 is a metal rim. The greater mass of the metal rim results in a greater rotational inertia of the outer rim 32, thereby making the rotation stroke of the outer rim 32 longer.

A second aspect of the present disclosure provides a magnetic damping generation method based on any one of the magnetic damping rotational structures described in the first aspect, the magnetic damping generation method including the following steps:
Step 1: Driving, by the outer ring wheel 3, the second annular magnetic bearing 4 to rotate when the outer ring wheel 3 is scrolled by a user;
Step 2: Rotating the second annular magnetic bearing 4 to cause a displacement between the first magnetic protrusion 22 and the second magnetic protrusion 42, where the first magnetic protrusion 22 and the second magnetic protrusion 42 are in one-to-one correspond, have opposite magnetic poles, and attract each other; and,
Step 3: Changing an attraction magnetic force between the first magnetic protrusion 22 and the second magnetic protrusion 42 to generate damping between the first magnetic protrusion 22 and the second magnetic protrusion 42.

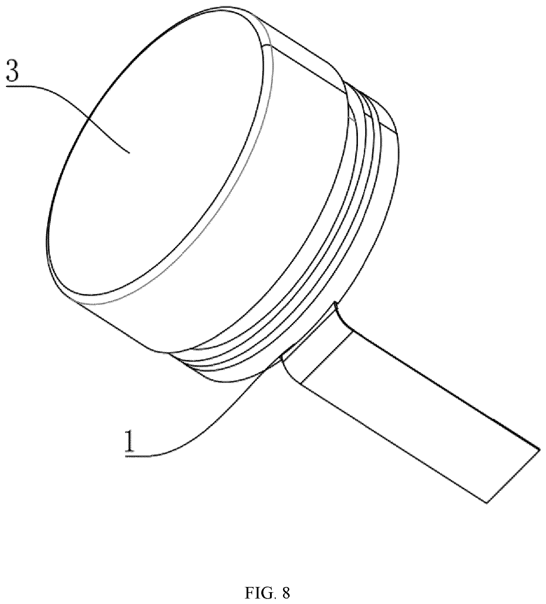

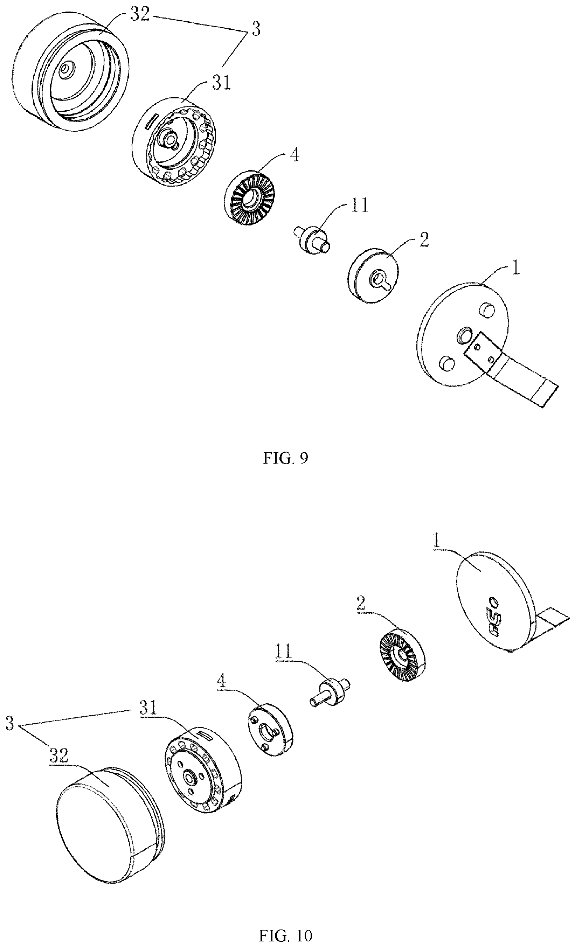

The technical solutions of the present disclosure can be applied to fields such as mice, keyboards, automotive dashboards, etc. In the field of mice, as shown in FIGs. 1, 2, 3, and 4, the magnetic damping rotational structure of the present disclosure is configured as the scroll wheel of a mouse. The scroll wheel of a mouse can be designed with a single-scroll wheel structure or a dual-scroll wheel structure (the design of the dual-scroll wheel structure refers to the structural design of the second embodiment mentioned above). In the field of keyboards and automotive dashboards, as shown in FIGs. 8, 9, and 10, the magnetic damping rotational structure of the present disclosure is configured as a volume-control scroll wheel (or as a page scrolling control device) of a keyboard or an automotive dashboard.

Therefore, a third aspect of the present disclosure provides a mouse, including a mouse housing, a circuit board, and a magnetic damping rotational structure as described above. The mouse housing is arranged with a plurality of buttons. The circuit board is arranged inside the mouse housing, and is arranged with a light-emitting component and a photosensitive receiving component. The magnetic damping rotational structure is arranged inside the mouse housing. The light-emitting component and the photosensitive receiving component are respectively arranged at two sides of the magnetic damping rotational structure. The light-emitting component and the photosensitive receiving component are respectively arranged corresponding to two ends of the light pass hole 312.

In some embodiments, the light-emitting component and the photosensitive receiving component are arranged at the same end of the light pass hole 312. The other end of the light pass hole 312 is arranged with a light-reflection plate, and the light-reflection plate is used to reflect light emitted from the light pass hole 312, so that the light is reflected onto the photosensitive receiving component. This achieves the technical effect of scroll wheel rotating induction.

In summary, the present disclosure provides a magnetic damping rotational structure and a magnetic damping generation method. In the present technical solutions, a plurality of first magnetic protrusions 22 are spaced around a central axis from an side surface of the first annular magnetic bearing 2 using a first groove 21, so that the magnetic strength of the side surface of the first annular magnetic bearing 2 is uniformly distributed at the plurality of first magnetic protrusions 22. Similarly, the magnetic strength of the side surface of the second annular magnetic bearing 4 is uniformly distributed at the plurality of second magnetic protrusions 42. When the second annular magnetic bearing 4 rotates slowly, the damping value changes due to the attraction between the first annular magnetic bearing 2 and the second annular magnetic bearing 4, resulting in a notched feedback of hand-feel weight. This effectively improves the damping effect and can be applied in fields such as mice, keyboards, automotive dashboards, etc.

Obviously, the above embodiments are only examples provided for a clear description, and do not limit implementations. For ordinary skilled in the art, other forms of changes or modifications can be made based on the above description. It is not necessary and impossible to exhaustively list all implementations here. The obvious changes or modifications arising from this are still within the protection scope of the present disclosure.

## Claims

1. A magnetic damping rotational structure, comprising:
a mounting base;
a first annular magnetic bearing, fixed at the mounting base, wherein at least one side surface of the first annular magnetic bearing is uniformly arranged with a plurality of first grooves, and a first magnetic protrusion is formed between adjacent two first grooves; and,
at least one second annular magnetic bearing, rotatably arranged at the mounting base, wherein the second annular magnetic bearing and the first annular magnetic bearing are coaxially arranged together, a plurality of second grooves are uniformly arranged at a surface of one side of the second annular magnetic bearing facing the first magnetic protrusion, and a second magnetic protrusion is formed between adjacent two second grooves;
wherein a gap is formed between the first magnetic protrusion and the second magnetic protrusion, and the first magnetic protrusion and the second magnetic protrusion are arranged in one-to-one correspondence and generate attraction magnetic forces.

2. The magnetic damping rotational structure according to claim 1, wherein a quantity of first grooves is the same as a quantity of second grooves, a size of the first magnetic protrusion is the same as a size of the second magnetic protrusion, and a shape of the first magnetic protrusion is the same as a shape of the second magnetic protrusion.

3. The magnetic damping rotational structure according to claim 1, wherein the first groove and the second groove are both V-shaped grooves.

4. The magnetic damping rotational structure according to claim 1, wherein an outer ring wheel is coaxially arranged at the second annular magnetic bearing, and the outer ring wheel is detachably connected to the second annular magnetic bearing.

5. The magnetic damping rotational structure according to claim 4, wherein a plurality of positioning pins are arranged at the second annular magnetic bearing, and the second annular magnetic bearing is fixedly connected to the outer ring wheel through the positioning pins.

6. The magnetic damping rotational structure according to claim 4, wherein the outer ring wheel comprises:
a grating clamp ring, wherein the grating clamp ring and the second annular magnetic bearing are coaxially arranged together, a plurality of light pass holes are arranged in a circumferential direction of the grating clamp ring, and an extension direction of the through holes is parallel to an axis direction of the grating clamp ring; and,
an outer rim, sleeved on an outer side wall of the grating clamp ring.

7. The magnetic damping rotational structure according to claim 6, wherein a clearance groove is arranged at the axis of the grating clamp ring and is configured to accommodate the first annular magnetic bearing and the second annular magnetic bearing.

8. The magnetic damping rotational structure according to claim 6, wherein the outer rim is a metal rim.

9. A magnetic damping generation method of the magnetic damping rotational structure according to any one of claims 1 to 8, comprising the following steps:
driving, by the outer ring wheel, the second annular magnetic bearing to rotate when the outer ring wheel is scrolled by a user;
rotating the second annular magnetic bearing to cause a displacement between the first magnetic protrusion and the second magnetic protrusion, wherein the first magnetic protrusion and the second magnetic protrusion are in one-to-one correspond, have opposite magnetic poles, and attract each other; and,
changing an attraction magnetic force between the first magnetic protrusion and the second magnetic protrusion to generate damping between the first magnetic protrusion and the second magnetic protrusion.
